# EUROPEAN PATENT APPLICATION

(11) **EP 1 768 312 A1**
(43) Date of publication of application: **28.03.2007**
(21) Application number: 04797378.9
(22) Date of filing: 24.11.2004
(51) Int. Cl.: H04L 12/28, H04Q 7/38

(54) **A METHOD FOR DATA TRANSMISSION BETWEEN NETWORK APPARATUS**

(30) Priority: 30.06.2004 CN 200410062649
(71) Applicant: Lenovo (Beijing) Limited, Haidan District, Beijing 100085 (CN)
(72) Inventor: HUANG, Jingnan, Haidian District, Beijing 100085 (CN); LUO, Yujin, Haidian District, Beijing 100085 (CN); LIU, Yang, Haidian Districtm, Beijing 100085 (CN)
(74) Representative: Pawlyn, Anthony Neil
(86) International application number: PCT/CN2004/001348
(87) International publication number: WO 2006/002579

(57) **Abstract**

The present invention discloses a method for data transmission between devices in a network. In the method, a pipe control module is provided in each of the network devices, and the data transmission procedure comprises steps of: 1) encapsulating, respectively by the pipe control modules of a source device for data transmission and a target device for data transmission in one and the same network, different media network connection manners available for both the source device and the target device into a data transmission pipe, according to operating conditions of the devices, and creating the data transmission pipe between the source device and the target device; 2) selecting, by the pipe control module of the source device, one media network connection manner out of the data transmission pipe to perform data transmission; and 3) when it is necessary to switch to another media network connection manner during the data transmission, controlling, by the pipe control module of the source device, to create a new media network connection to continue the data transmission. With the method of the present invention, an available connection manner can be automatically selected and used during the data transmission so as to facilitate the users and save the system resources.

## Description

### BACKGROUND OF THE INVENTION

### FIELD OF INVENTION

The present invention relates to network techniques, more particularly, to a method for data transmission between devices in a network.

### DESCRIPTION OF PRIOR ART

With the progressive population of various wireless network techniques, more and more network devices are connected with other network devices via a wireless network. Such devices transmit and receive information on the basis of wireless connections.

Because the wireless signals have features of instability and attenuation of signal strength while the distance increases. And the devices with the wireless connection abilities have a feature of high mobility, the network application developers must additionally deal with the creation, maintenance and detection procedures of the network connections when developing applications based on network connections especially the wireless network connections. At the same time, it is necessary to add sufficient processing for abnormal network connection in various stages. All of these result in added difficulties in the application development.

On the other hand, more and more network devices have more than one network connection manners; for example, a laptop computer usually has the network connection abilities of Wireless Local Area Network (WLAN), Bluetooth, Infrared and the like. However, in a case of individually using one of them, there are always some unstable factors. For instance, although WLAN connection has a relative long transmission distance, the signals thereof will be greatly influenced by the environment, whereas Bluetooth connection and Infrared connection have a very limited transmission distance.

Presently, although some network devices have more than one network connection manners, only one network connection manner is selected for one data transmission between the network devices. Once there are some abnormal conditions in the data transmission, the connection is disconnected and the user has to recreate the connection and perform retransmission. If the network is in a poor condition, it is also required to use other connection manners or recreate the connection with the original connection manner for several times. In the transmission, it cannot automatically switch to an available connection manner, which causes inconvenience of the user. In addition, in this procedure, if the information which shall be transmitted in one transmission is not completely transmitted, the transmitted portion always needs to be retransmitted, which causes the waste of the system resources.

For example, two laptop computers are performing transmission by using Bluetooth. If at this time, the user of one laptop computer leaves, a WLAN connection which has a relative long transmission distance has to be created for the transmission; otherwise, the distance between the two laptop computers will go beyond the transmission range of Bluetooth, and the connection will be automatically disconnected, and the transmitted data will be lost. Such a case will bring a great inconvenience for the usage of the laptop computers, and data retransmission will waste the system resources.

### SUMMARY OF THE INVENTION

Considering the above, the main object of the present invention is to provide a method for data transmission between network devices, which is able to automatically select an available connection manner for data transmission in the course of the data transmission so as to facilitate the usage of a user.

For achieving the above object, the technical solution of the present invention is embodied as follows.

A method for data transmission between devices in a network, a pipe control module being provided in each of the network devices, and the data transmission procedure comprising steps of:
1) encapsulating, respectively by the pipe control modules of a source device for data transmission and a target device for data transmission in one and the same network, different media network connection manners available for both the source device and the target device into a data transmission pipe, according to operating conditions of the devices, and creating the data transmission pipe between the source device and the target device;
2) selecting, by the pipe control module of the source device, one media network connection manner out of the data transmission pipe to perform data transmission; and
3) when it is necessary to switch to another media network connection manner during the data transmission, controlling, by the pipe control module of the source device, to create a new media network connection to continue the data transmission.

Wherein, said step 1) may comprise:
11) acquiring, by the pipe control modules of the source device for data transmission and the target device for data transmission in one and the same network, the different media network connection manners available for the counter-party by means of sensing a network multicast address;
12) controlling, by the pipe control module of the source device, the source device to select one available media network connection manner to create a network protocol connection with the target device;
13) sending, by the pipe control module of the source device, a data transmission pipe creation request to the target device via the network protocol connection created in the step 12);
14) determining, by the pipe control module of the target device, whether the creation of the data transmission pipe is agreed or not, according to its operating conditions, and then returning a data transmission pipe creation response to the source device; if the target device agrees on the creation of the data transmission pipe, then encapsulating the different media network connection manners available for both the source device and the target device into the data transmission pipe; and
15) judging, by the pipe control module of the source device, whether the target device agrees to create the data transmission pipe or not according to the data transmission pipe creation response returned by the target device; if yes, encapsulating the different media network connection manners available for both the source device and the target device into the data transmission pipe, and the data transmission pipe creation being successful; otherwise, the data transmission pipe creation fails.

Said step 1) may comprise steps of:
11a) creating, by the pipe control module of the source device, a network protocol connection with the target device by using a network protocol of the network in which the source device is located;
12a) sending, by the pipe control module of the source device, a data transmission pipe creation request to the target device via the network protocol connection created in the step 11a), the request containing different media network connection manners available for the source device itself;
13a) determining, by the pipe control module of the target device, whether the creation of the data transmission pipe is agreed or not, according to its operating conditions; if the creation of the data transmission pipe is agreed, encapsulating the different media network connection manners available for both itself and the counter-party into the data transmission pipe, and containing different media network connection manners available for the target device itself in the data transmission pipe creation response;
   returning, by the target device, the response to the source device;
14b) judging, by the pipe control module of the source device, whether the target device agrees to create the data transmission pipe or not according to the data transmission pipe creation response returned by the target device; if yes, encapsulating the different media network connection manners available for the source device itself and the different media network connection manners available for the counter-party contained in the response into the data transmission pipe, and the data transmission pipe creation being successful; otherwise, the data transmission pipe creation fails.

The pipe control module of the source device may create the network protocol connection between the source device and the target device according to a command to create a pipe sent by an application which will transmit data within the source device, and send the data transmission pipe creation request to the target device via the connection;
after receiving the data transmission pipe creation response returned by the target device, the pipe control module of the source device returns a result indicating whether the pipe creation is successful or not to the application which will transmit data within the source device.

The command to create a pipe sent by the application contains at least a device identity of the target device.

The pipe creation request sent by the pipe control module of the source device further contains a device identity of the source device, a device identity of the target device, and an expected time duration of the pipe;
the pipe creation response returned by the pipe control module of the target device further contains success or failure information on the pipe creation, and if the pipe creation is successful, the pipe creation response further contains its device identity, the identity of the source device, and a valid period of the pipe.

Said encapsulating method of the data transmission pipe may comprise a step of filling, respectively by the pipe control modules of the source device and the target device, the different media network connection manners available for both the source device and the target device into pipe information tables within the respective devices to which they respectively belong.

Said encapsulating method of the data transmission pipe may comprise steps of:
generating, by the pipe control module, information on the different media network connection manners available for both the source device and the target device at the present time, and judging whether a pipe information table exists in the device to which the pipe control module belongs; if not, creating a pipe information table, and adding the generated information into the pipe information table; if yes, directly adding the generated information into the pipe information table.

The information on the different media network connection manners available for both the source device and the target device contain a pipe identity, and information on network protocols and connection addresses commonly supported by the piped devices.

When said source device performs data transmissions with multiple target devices, it may respectively create data transmission pipes with the multiple target devices through its pipe control module.

Said step 2) may comprise steps of:
21) judging, by the pipe control module of the source device, whether an active network protocol connection which is in an available state and corresponds to the created data transmission pipe exists or not at present, if yes, going to step 22);
   if not, selecting one network protocol from the created data transmission pipe to attempt to create a new network protocol connection, and after the successful creation, going to step 22); and if the creation fails, selecting a next commonly-supported network protocol for attempts; if a connection can not be created even after all the matched protocols are tried, reporting to the source device that the data transmission pipe is not available, and the procedure being terminated;
22) putting, by the pipe control module, data to be transmitted into a task queue of the active network protocol connection which is in the available state at present, for transmitting the data to the target device.

The procedure of putting data to be transmitted into a task queue of the active network protocol connection which is in the available state at present in said step 22) may comprise steps of:
22a) judging, by the pipe control module, the traffic amount waiting to be transmitted on the available connection and the average speed for transmitting data on the network connection, if the traffic amount waiting to be transmitted is too large or the average speed for transmitting data on the network connection is too low, going to step 22b); otherwise, putting the data to be transmitted into the task queue of the presently available network protocol connection;
22b) searching, by the pipe control module, whether any other available network protocol connection exists or not at present, if yes, returning to the step 22a); otherwise, selecting a network protocol commonly matched between the source device and the target device to attempt to create a new network protocol connection, if the creation is successful, putting the data to be transmitted into a task queue of the newly created network protocol connection; otherwise, putting the data to be transmitted into the task queue of the originally available network protocol connection.

The pipe control module of the source device performs the step 21) after receiving a command to transmit data sent by an application which will transmit data in the source device;
the pipe control module of the source device returns a result indicating whether the data transmission is successful or not to the application which will transmit data after the data transmission is completed or failed.

The command to transmit data sent by the application contains at least a pipe identity, an identity of the target device, an identity of a target application, and source data to be transmitted.

The data to be transmitted contains at least a device identity of the source device, an identity of the application transmitting the data, an identity of the target device, an identity of a target application, and source data to be transmitted.

After receiving the data, the pipe control module of the target device distributes the data to the target application program in the target device according to the identity of the target application in the data.

Said step 3) may comprise steps of:
when the network protocol connection for transmitting the data is disconnected during the data transmission, selecting, by the pipe control module of the source device, a new media network connection manner out of the data transmission pipe, and creating a network protocol connection; if the creation is successful, using the new network protocol connection to continue the data transmission and notifying the source device; otherwise, notifying the source device that the data transmission is erroneous and the data transmission pipe is not available.

The method may further comprise steps of: when the data transmission pipe is idle, sending, by the pipe control module of the source device, a pipe detection request to the target device;
after receiving the detection request, returning, by the pipe control module of the target device, a pipe detection response according to its operating conditions;
if the source device does not receive any pipe response or the received pipe response is that the pipe is not available, deleting, by the pipe control module of the source device, the pipe.

Said pipe detection request contains at least an expected pipe available period from the source device;
said pipe detection response contains at least a pipe available period;
if the pipe available period is zero in the pipe response received by the source device, the pipe is not available.

The method may further comprise: deleting, by the pipe control module of the source device or the target device, the data transmission pipe after the data transmission is completed, and sending a pipe close notification to the device of the counter-party, and deleting, by the device of the counter-party, the data transmission pipe after receiving the close notification.

Said pipe control module may send a pipe close notification to the device of the counter-party after receiving a command to close the pipe sent by the application;
after deleting the data transmission pipe, the pipe control module returns a result indicating whether the pipe closure is successful or not to the application sending the command to close the pipe.

From the above technical solutions, the method for data transmission between network devices according to the present invention is provided in the network devices, in which different media network connection manners available between the devices are encapsulated into a data transmission pipe, the pipe control module controls to perform the data transmission with one network connection manner out of the pipe, and if the connection is disconnected, the pipe control module automatically selects another network connection manner from the pipe to create a connection for data transmission. Consequently, when the original connection is disconnected during the transmission, the present invention achieves the automatic switching to the available connection manner to continue the data transmission, and thus brings forth convenience for the usage of the users.

### BRIEF DESCRIPTION OF THE DRAWINGS

Fig. 1 is a schematic diagram of the data transmission procedure according to one preferred embodiment of the present invention;
Fig. 2 is a flowchart for the pipe control module of the source device to create a data transmission pipe in the embodiment shown in Fig. 1;
Fig. 3 is a flowchart for the pipe control module of the source device to perform data transmission in the embodiment shown in Fig. 1.

### DETAILED DESCRIPTION OF PREFERRED EMBODIMENTS

To make the objects, technical solutions and advantages of the present invention apparent, the present invention will be further described in detail by referring to the drawings and the illustrated embodiments.

In the method for data transmission in devices in a network according to the present invention, a pipe control module is provided in each of the network devices, and the pipe control modules of a source device for data transmission and a target device for data transmission in one and the same network respectively encapsulate different media network connection manners available for both the source device and the target device into a data transmission pipe, according to operating conditions of the devices, and create the data transmission pipe between the source device and the target device; one media network connection manner out of the data transmission pipe is selected to perform data transmission; and when it is necessary to switch to another media network connection manner during the data transmission, the pipe control module of the source device controls to create a new media network connection to continue the data transmission.

In the present invention, the different media network connection manners available for both the source device and the target device are encapsulated into the data transmission pipe, and there are two implementations for creating the data transmission pipe between the source device and the target device:

The first implementation comprises the steps of:
11) acquiring, by the pipe control modules of the source device for data transmission and the target device for data transmission in one and the same network, the different media network connection manners available for the counter-party by means of sensing a network multicast address;
12) selecting, by the source device, one available media network connection manner to create a network protocol connection with the target device;
13) sending, by the pipe control module of the source device, a data transmission pipe creation request to the target device via the network protocol connection created in the step 12);
14) determining, by the pipe control module of the target device, whether the creation of the data transmission pipe is agreed or not, according to its operating conditions, and then returning a data transmission pipe creation response to the source device; if the target device agrees on the creation of the data transmission pipe, encapsulating the different media network connection manners available for both the source device and the target device into the data transmission pipe; and
15) judging, by the pipe control module of the source device, whether the target device agrees to create the data transmission pipe or not according to the data transmission pipe creation response returned by the target device; if yes, encapsulating the different media network connection manners available for both the source device and the target device into the data transmission pipe, and the data transmission pipe creation being successful; otherwise, the data transmission pipe creation fails.

The second implementation comprises steps of:
11a) creating, by the source device, a network protocol connection with the target device by using a network protocol of the network in which the source device is located;
12a) sending, by the pipe control module of the source device, a data transmission pipe creation request to the target device via the network protocol connection created in the step 11a), the request containing different media network connection manners available for the source device itself;
13a) determining, by the pipe control module of the target device, whether the creation of the data transmission pipe is agreed or not, according to its operating conditions; if the creation of the data transmission pipe is agreed, encapsulating the different media network connection manners available for both itself and the counter-party into the data transmission pipe, and containing different media network connection manners available for the target device itself in the data transmission pipe creation response; returning, by the target device, the response to the source device;
14b) judging, by the pipe control module of the source device, whether the target device agrees to create the data transmission pipe or not according to the data transmission pipe creation response returned by the target device; if yes, encapsulating the different media network connection manners available for the source device itself and the different media network connection manners available for the counter-party contained in the response into the data transmission pipe, and the data transmission pipe creation being successful; otherwise, the data transmission pipe creation fails.

In the above two implementations, the encapsulating method of the data transmission pipe may be as follows: the pipe control modules of the source device and the target device respectively fill the different media network connection manners available for both the source device and the target device into pipe information tables within the respective devices to which they respectively belong, and the pipe information table is usable for subsequent searches. Particularly, the pipe control module generates information on the different media network connection manners available for both the source device and the target device at the present time, and judges whether a pipe information table exists or not in the device to which the pipe control module belongs; if not, creates a pipe information table, and adds the generated information into the pipe information table; if yes, directly adds the generated information into the pipe information table; wherein, the information on the different media network connection manners available for both the source device and the target device contains a pipe identity, and information on network protocols and connection addresses commonly supported by the piped devices.

The embodiment illustrated in the following is the first implementation as indicated above, that is to say, the pipe control modules of the source device for data transmission and the target device for data transmission in one and the same network acquire the different media network connection manners available for the counter-party by means of sending a network multicast address.

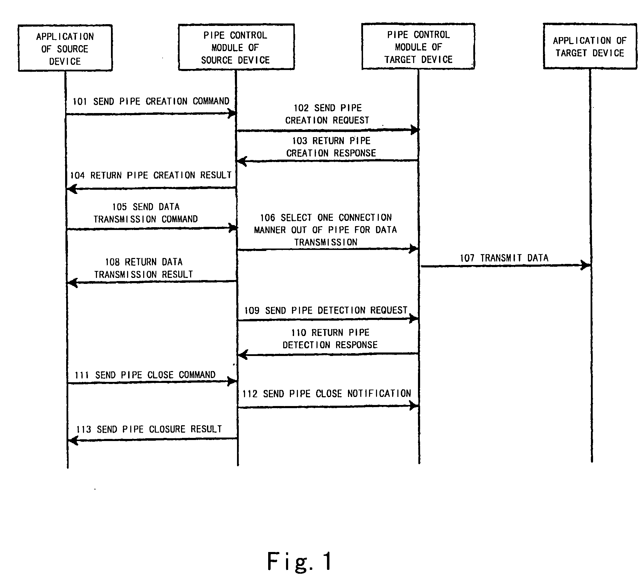

Referring to Fig. 1, Fig. 1 is a schematic diagram of the data transmission procedure according to one preferred embodiment of the present invention. This procedure includes the following steps.
Step 101, an application which will transmit data in a source device sends a command to create a pipe to a pipe control module in the source device, and the command to create a pipe contains a device identity of a target device.
Step 102, the pipe control module of the source device controls to create a network connection between the source device and the target device, such as a TCP connection, and sends a pipe creation request message to the target device according to the identity of the target device contained in the command to create a pipe. The pipe creation request message contains a device identity of the source device, the device identity of the target device and an expected time duration of the pipe.
Step 103, a pipe control module of the target device determines whether the creation of the data transmission pipe is agreed or not, according to its operating conditions, and then returns a data transmission pipe creation response message to the source device; if the target device agrees on the creation of the data transmission pipe, the different media network connection manners available for both the source device and the target device are encapsulated into the data transmission pipe, that is to say, information on the different media network connection manners available for both the source device and the target device is filled into a pipe information table. The pipe creation response message contains success or failure information on the pipe creation, and if the pipe creation is successful, the pipe creation response further contains its device identity, the identity of the source device, and a valid period of the pipe.
Step 104, the pipe control module of the source device judges whether the target device agrees to create the data transmission pipe or not according to the data transmission pipe creation response returned by the target device; if yes, the different media network connection manners available for both the source device and the target device are encapsulated into the data transmission pipe, that is to say, information on the different media network connection manners available for both the source device and the target device is filled into a pipe information table, and the data transmission pipe creation is successful; otherwise, the data transmission pipe creation fails. The pipe control module of the source device returns a result of the pipe creation to the application in the source device.
Step 105, the application in the source device sends a command to transmit data to the pipe control module of the source device, in which the command to transmit data contains a pipe identity, the identity of the target device, an identity of a target application, and source data to be transmitted.
Step 106, after receiving the command to transmit data, the pipe control module of the source device selects one media network connection manner out of the data transmission pipe, and sends the data to be transmitted to the pipe control module of the target device. The data to be transmitted contains at least the device identity of the source device, an identity of the application transmitting the data, the identity of the target device, the identity of the target application, and the source data to be transmitted.
Step 107, after receiving the data, the pipe control module of the target device distributes the data to the target application program in the target device according to the identity of the target application in the data.
Step 108, the pipe control module of the source device returns a result indicating whether the data transmission is successful or not to the application in the source device after the data transmission is completed or failed.
Step 109, when the data transmission pipe is idle, the pipe control module of the source device sends a pipe detection request to the target device, in which the pipe detection request contains an expected pipe available period from the source device.
Step 110, after receiving the detection request, the pipe control module of the target device returns a pipe detection response according to its operating conditions, in which the pipe detection response contains a pipe available period, and if the pipe is not available, the pipe control module of the target device can set the pipe available period contained in the pipe detection response into zero. If the source device does not receive any pipe response or the received pipe response is that the pipe is not available, the pipe control module of the source device deletes the pipe.
Step 111, the application in the source device sends a command to close the pipe after the data transmission is completed, in which the command contains the identity of the pipe to be closed.
Step 112, after receiving the command to close the pipe, the pipe control module of the source device deletes the data transmission pipe according to the identity of the pipe therein, and sends a pipe close notification to the target device. After receiving the close notification, the target device deletes the data transmission pipe.
Step 113, after deleting the data transmission pipe, the pipe control module of the source device returns a result indicating whether the pipe closure is successful or not to the application sending the command to close the pipe.

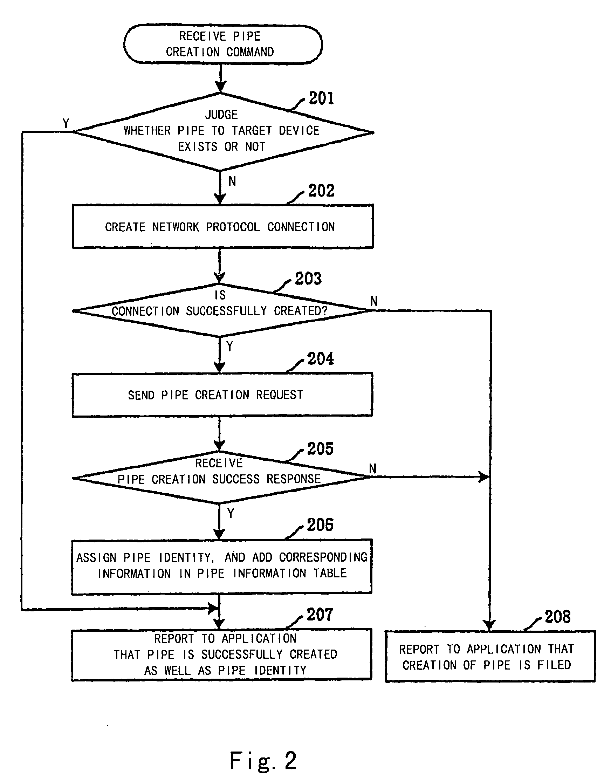

In the present embodiment, step 102 - step 104 are the procedures for creating the data transmission pipe, and the detailed processing of the pipe control module of the source device in such procedure is shown in Fig. 2. Fig. 2 is a flowchart for the pipe control module of the source device to create a data transmission pipe in the embodiment shown in Fig. 1, and the procedure includes the following steps.
Step 201, after receiving a command to create a pipe, the pipe control module of the source device judges whether a data transmission pipe between the source device and the target device exists or not, if yes, the procedure goes to step 207; otherwise, the procedure goes to step 202.
Step 202, the pipe control module of the source device selects one available media network connection manner to create a network protocol connection with the target device, such as a TCP connection.
Step 203, it is judged whether the TCP connection is successful or not, and if yes, the procedure goes to step 204; otherwise, the procedure goes to step 208.
Step 204, the pipe control module of the source device sends a pipe creation request to the target device via the TCP connection.
Step 205, it is judged whether a pipe creation success response is received or not, and if yes, the procedure goes to step 206; otherwise, the procedure goes to step 208.
Step 206, a pipe identity is assigned to the successfully created pipe, and corresponding information is added in the pipe information table.
Step 207, a result of the pipe creation is returned to the application, and the pipe creation success information and the pipe identity are reported to the application. The pipe creation procedure is terminated.
Step 208, a result of the pipe creation is returned to the application, and the pipe creation failure information is reported to the application. The pipe creation procedure is terminated.

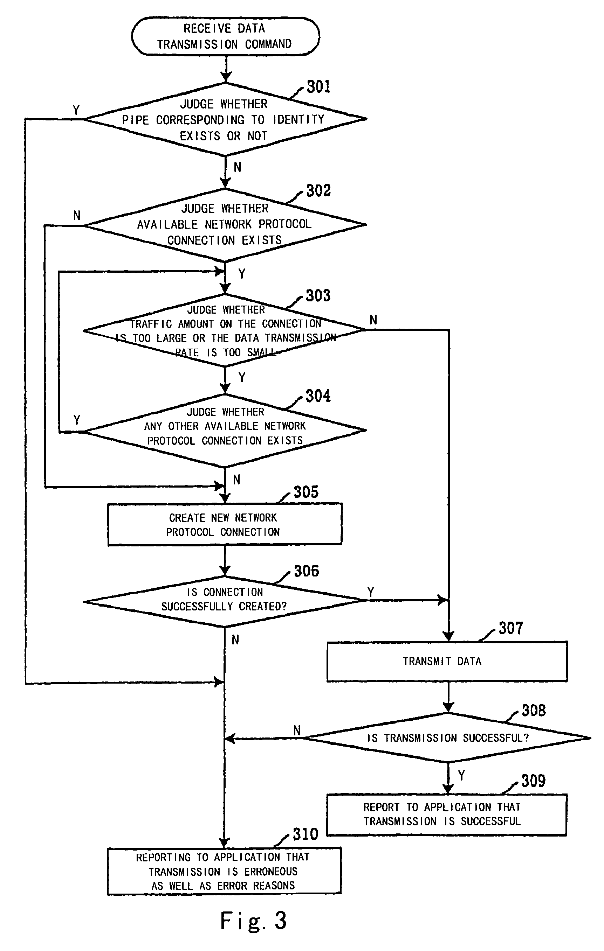

In the embodiment shown in Fig. 1, step 105 - step 108 are the procedures for data transmission, and the detailed processing of the pipe control module of the source device in such procedure is shown in Fig. 3. Fig. 3 is a flowchart for the pipe control module of the source device to perform data transmission in the embodiment shown in Fig. 1, and the procedure includes the following steps.
Step 301, after receiving a command to transmit data, the pipe control module of the source device judges whether a pipe corresponding to the pipe identity contained in the command exists or not, if yes, the procedure goes to step 302; otherwise, the procedure goes to step 310.
Step 302, it is judged whether an available network protocol connection exists at present, if yes, the procedure goes to step 303; otherwise, the procedure goes to step 305.
Step 303, the traffic amount waiting to be transmitted on the available network protocol connection and the average speed for transmitting data on the network protocol connection are determined, if the traffic amount waiting to be transmitted is too large or the average speed for transmitting data on the network connection is too low, the procedure goes to step 304; otherwise, the procedure goes to step 307.
Step 304, it is searched and judged whether other available network protocol connection exists or not at present, if yes, the procedure returns to step 303; otherwise, the procedure goes to step 305.
Step 305, a network protocol commonly matched between the source device and the target device is selected to attempt to create a new network protocol connection.
Step 306, it is judged whether the creation of the new network protocol connection is successful or not, if yes, the procedure goes to step 307; otherwise, the procedure goes to step 310.
Step 307, the data to be transmitted is put into a task queue of the currently available network protocol connection, and the data is transmitted.
Step 308, it is judged whether the transmission is successful or not, if yes, the procedure goes to step 309; otherwise, the procedure goes to step 310.
Step 309, a result of the data transmission is returned to the application, and it is reported that the data transmission is successful. The data transmission procedure is terminated.
Step 310, a result of the data transmission is returned to the application. And it is reported that the data transmission is erroneous as well as the error causes. The data transmission procedure is terminated.

In the above procedures, if the recreation of the network protocol connection is not successful because the traffic amount waiting to be transmitted is too large or the average speed of transmitting data on the network connection is too low, the original network protocol connection can also be used for data transmission but the efficiency of the transmission is low.

If the network protocol connection for transmitting the data is disconnected in the course of data transmission due to external factors, the pipe control module of the source device selects a new media network connection manner out of the data transmission pipe to create a network protocol connection. If the creation is successful, the new network protocol connection is used to continue the data transmission and the source device is notified; otherwise, the source device is notified that the data transmission is erroneous and the data transmission pipe is not available.

The pipe control module in the present embodiment may be provided with a pipe creation interface, a data transmission interface, a pipe detection interface and a pipe close interface. The source device may achieve the functions of pipe creation, data transmission, pipe detection, pipe closure and the like by invoking these interfaces of the pipe control module.

Additionally, if the source device in the present embodiment wants to perform data transmission with multiple target devices, the source device can respectively create the data transmission pipes with the multiple target devices through the pipe control module with the same method for creating a data transmission pipe but with different interfaces used by respective data transmission pipes. For example, it is assumed that the source device only has one Bluetooth port. If this port has been encapsulated into one data transmission pipe with a target device 1, this port cannot be encapsulated into a data transmission pipe between the source device and a target device 2.

It is assumed that in the embodiment shown in Fig. 1, the source device is a laptop computer 1, the target device is a laptop computer 2, and they are both located in one and the same WLAN. The laptop computer 1 and the laptop computer 2 are respectively mounted with a pipe control module 1 and a pipe control module 2, and both have a WLAN network card and a Bluetooth network card. A TCP/IP protocol is loaded on the WLAN network card of the laptop computer 1 with an IP address of 192.168.0.1 and a sensing port of 1234; and a serial port profile is loaded on the Bluetooth network card of the laptop computer 1 with an analog-out serial port number of the serial port 2. A TCP/IP protocol is loaded on the WLAN network card of the laptop computer 2 with an IP address of 192.168.0.2 and a sensing port of 2345; and a serial port profile is loaded on the Bluetooth network card of the laptop computer 2 with an analog-out serial port number of the serial port 3. An application Fc on the laptop computer 1 is a client for performing a function of file transmission, and an application Fs on the laptop computer 2 is a server for performing the function of file transmission.

Respectively through the sensing port 1234 and the sensing port 2345, the laptop computer 1 and the laptop computer 2 respectively sense different media network connection manners available to the counter-party which are sent from the counter-party to a network multicast address.

As such, a procedure of transmitting data from the FC on the laptop computer 1 to the Fs on the laptop computer 2 may include the followings.
1. The Fc on the laptop computer 1 sends a command to create a pipe to the pipe control module 1.
2. The pipe control module 1 selects one media network connection manner available for both the laptop computer 1 and the laptop computer 2 to create a network protocol connection. In the present embodiment, the TCP/IP protocol is selected to create a TCP connection between the laptop computer 1 and the laptop computer 2.
3. The pipe control module 1 sends a pipe creation request message to the laptop computer 2 though the created TCP connection. The pipe creation request message is shown as Table 1.

**Table 1**

| Message Fields | Values | Comments |
|---|---|---|
| MessageType | CreatePipeRequest | Create Pipe Request |
| SourceDevicelD | Urn:IGRS:device:devicelD:xx xxx | Source Device Identity |
| TargetDevicelD | Urn:IGRS:device:deviceID:xx xxx | Target Device Identity |
| ClientID | 32 bit UINT | Identity Of Application Initiating Pipe Creation |
| Time | 1800 | Pipe Usage Time: 1800 Seconds |

4. After receiving the pipe creation request message, the channel control module 2 of the laptop computer 2 accepts the pipe creation request according to current operating conditions of the laptop computer 2, and sends a pipe creation response message to the laptop computer 1. The pipe creation response message is shown as Table 2.

**Table 2**

| Message Fields | Values | Comments |
|---|---|---|
| MessageType | CreatePipeResponse | Create Pipe Response |
| TargetDeviceID | Urn:IGRS:device:deviceID:xx xxx | Identity Of Device Initiating Pipe Creation Request |
| SourceDeviceID | urn:IGRS:device:deviceID:xx xxxx | Identity Of Device Initiating Pipe Creation Response |
| ResultCode | Success | Pipe Is Successfully Created. |
| Time | 1800 | Pipe Usage Time: 1800 Seconds |

If the channel control module 2 of the laptop computer 2 does not accept the pipe creation request, the value of the message field "ResultCode" shown in Table 2 will be "Failure".
5. After receiving the pipe creation response message, the software module on the laptop computer 1 reports a success or failure result of the pipe creation to the program Fc. Once receiving the result report of the successful pipe creation, the Fc may transmit data to the Fs via this pipe. The data transmission message is shown as Table 3.

**Table 3**

| Message Fields | Values | Comments |
|---|---|---|
| MessageType | DataSend | Data Transmission Message |
| TargetDevicelD | Urn:IGRS:device:deviceID:xxxxx | Device Identity Of Laptop 2 |
| SourceDevicelD | Urn:IGRS:device:deviceID:xxxxx | Device Identity Of Laptop 1 |
| ClientID | 1 | Application Identity Of Fc |
| ServiceID | 1 | Application Identity Of Fs |
| Data | <Data>.......</Data> | Source Data Packaged In XML |

In which, "Data" field can be the source data packaged in other formats.

In the present embodiment, if the application Fc on the laptop computer 1 sends data to the Fs in a large quantity, the software module on the laptop computer 1 may fulfill the data transmission requirements by creating a new TCP connection. At this time, a channel information table is shown as Table 4.

**Table 4**

| Device Identity | Urn:IGRS:device:devicelD:xx xxx | Device Identity Of Laptop 2 |
|---|---|---|
| Available Connection List | Protocol: TCP Socket:123 Socket: 126 | Two TCP Connections Created Between Laptop 1 And Laptop 2 |
| Matched Protocol List | TCP: 192.168.0.2: 2345 Serial Port: 2 | List For Network Protocol Information Able To Create Creation With Laptop 2 |
| Condition On Data Waiting To Be Transmitted | Socket:123:100KB Socket:126:200KB | Traffic Amounts Currently Waiting To Be Transmitted On Respective TCP Connections |
| Pipe Available Time | 1800 | Available Time: 30 Seconds |
| Pipe-Related Program Identity | ProgramID:1 | Identities Of Application Programs Related With The Pipe, Including Identity Of Application Creating The Pipe And Identity Of Application Using The Pipe |

If these two TCP connections are disconnected due to external factors in the course of data transmission, the channel control module 1 of the laptop computer 1 records a position of the current data transmission, and selects SerialPort: 2 out of the data transmission pipe to attempt to connect, and if the connection is successfully created, the channel control module 1 of the laptop computer 1 continues the data transmission through SerialPort: 2 according to the recorded data position. If the creation of connection fails, the channel control module notifies the Fc that the data transmission is erroneous and the current pipe is not available.

During a pipe idle period in which both the laptop computer 1 and the laptop computer 2 have finished the transmission of the data to be transmitted, the channel control module 1 of the laptop computer 1 may regularly sends a pipe detection request message to the laptop computer 2 to detect the availability of the pipe. The pipe detection request message is shown as Table 5.

**Table 5**

| Message Fields | Values | Comments |
|---|---|---|
| MessageType | PipeDetectRequest | Pipe Detection Request |
| TargetDevicelD | Urn:IGRS:device:devicelD:xxxxx | Device Identity Of Laptop 2 |
| SourceDevicelD | Urn:IGRS:device:devicelD:xxxxx | Device Identity Of Laptop 1 |
| Time | 1200 | Pipe Available Time: 20 Seconds |

After receiving the pipe detection request form the laptop computer 1, the channel control module 2 of the laptop computer 2 may send a pipe detection response message according to actual conditions. If the load on the laptop computer 2 is too heavy, the channel control module 2 of the laptop computer 2 may send a detection response message with a pipe available time of 0. The message is shown as Table 6.

**Table 6**

| Message Fields | Values | Comments |
|---|---|---|
| MessageType | PipeDetectResponse | Pipe Detection Respones |
| TargetDevicelD | Urn:IGRS:device:deviceID:xxxxx | Device Identity Of Laptop 1 |
| SourceDevicelD | Urn:IGRS:device:deviceID:xxxxx | Device Identity Of Laptop 2 |
| Time | 0 | Pipe Available Time: 0 Second, The Pipe Is Not Available. |

After the pipe creation is successful, the channel control module of the laptop computer 1 or the laptop computer 2 may also send a pipe close notification message to the counter-party to notify the counter-party that the pipe is not available any more, if necessary. The pipe close notification message is shown as Table 7.

**Table 7**

| Message Fields | Values | Comments |
|---|---|---|
| MessageType | PipeCloseNotify | Pipe Close Notification |
| TargetDevicelD | Urn:IGRS:device:deviceID:xxxxx | Device Identity Of Laptop 1 |
| SourceDevicelD | Urn:IGRS:device:devicelD:xxxxx | Device Identity Of Laptop 2 |

The present embodiment is not only applicable to the wireless data transmissions between laptop computers, but also applicable to those between a laptop computer and a mobile phone, between mobile phones, those between a mobile phone and a PDA, those between PDAs, those between a PDA and a laptop computer, and those between various network devices. Of course, the present invention is also applicable to the wired data transmission between network devices on a wired network.

According to the above embodiments, the method for data transmission between network devices of the present invention can automatically select an available connection manner to perform data transmission in the course of transmitting data, and thus facilitates the users and saves the system resources.

## Claims

1. A method for data transmission between devices in a network, which is **characterized in that** a pipe control module is provided in each of the devices, and the method for data transmission comprising steps of:
1) encapsulating, respectively by the pipe control modules of a source device for data transmission and a target device for data transmission in one and the same network, different media network connection manners available for both the source device and the target device into a data transmission pipe, according to operating conditions of the devices, and creating the data transmission pipe between the source device and the target device;
2) selecting, by the pipe control module of the source device, one media network connection manner out of the data transmission pipe to perform data transmission; and
3) when it is necessary to switch to another media network connection manner during the data transmission, controlling, by the pipe control module of the source device, to create a new media network connection to continue the data transmission.

2. The method for data transmission according to Claim 1, wherein said step 1) comprises:
11) acquiring, by the pipe control modules of the source device for data transmission and the target device for data transmission in one and the same network, the different media network connection manners available for the counter-party by means of sensing a network multicast address;
12) controlling, by the pipe control module of the source device, the source device to select one available media network connection manner to create a network protocol connection with the target device;
13) sending, by the pipe control module of the source device, a data transmission pipe creation request to the target device via the network protocol connection created in the step 12);
14) determining, by the pipe control module of the target device, whether the creation of the data transmission pipe is agreed or not, according to its operating conditions, and then returning a data transmission pipe creation response to the source device; if the target device agrees on the creation of the data transmission pipe, encapsulating the different media network connection manners available for both the source device and the target device into the data transmission pipe; and
15) judging, by the pipe control module of the source device, whether the target device agrees to create the data transmission pipe or not according to the data transmission pipe creation response returned by the target device; if yes, encapsulating the different media network connection manners available for both the source device and the target device into the data transmission pipe, and the data transmission pipe creation being successful; otherwise, the data transmission pipe creation fails.

3. The method for data transmission according to Claim 1, wherein said step 1) comprises:
11 a) creating, by the pipe control module of the source device, a network protocol connection with the target device by using a network protocol of the network in which the source device is located;
12a) sending, by the pipe control module of the source device, a data transmission pipe creation request to the target device via the network protocol connection created in the step 11a), the request containing different media network connection manners available for the source device itself;
13a) determining, by the pipe control module of the target device, whether the creation of the data transmission pipe is agreed or not, according to its operating conditions; if the creation of the data transmission pipe is agreed, encapsulating the different media network connection manners available for both itself and the counter-party into the data transmission pipe, and containing different media network connection manners available for the target device itself in the data transmission pipe creation response; returning, by the target device, the response to the source device;
14b) judging, by the pipe control module of the source device, whether the target device agrees to create the data transmission pipe or not according to the data transmission pipe creation response returned by the target device; if yes, encapsulating the different media network connection manners available for the source device itself and the different media network connection manners available for the counter-party contained in the response into the data transmission pipe, and the data transmission pipe creation being successful; otherwise, the data transmission pipe creation fails.

4. The method for data transmission according to Claim 2 or 3, wherein the pipe control module of the source device creates the network protocol connection between the source device and the target device according to a command to create a pipe sent by an application which will transmit data within the source device, and sends the data transmission pipe creation request to the target device via the connection;
after receiving the data transmission pipe creation response returned by the target device, the pipe control module of the source device returns a result indicating whether the pipe creation is successful or not to the application which will transmit data within the source device.

5. The method for data transmission according to Claim 4, wherein the command to create a pipe sent by the application contains at least a device identity of the target device.

6. The method for data transmission according to Claim 2 or 3, wherein the pipe creation request sent by the pipe control module of the source device further contains a device identity of the source device, a device identity of the target device, and an expected time duration of the pipe;
the pipe creation response returned by the pipe control module of the target device further contains success or failure information on the pipe creation, and if the pipe creation is successful, the pipe creation response further contains its device identity, the identity of the source device, and a valid period of the pipe.

7. The method for data transmission according to any one of Claims 1 to 3, wherein said step of encapsulating the data transmission pipe comprises a step of filling, respectively by the pipe control modules of the source device and the target device, the different media network connection manners available for both the source device and the target device into pipe information tables within the respective devices to which they respectively belong.

8. The method for data transmission according to Claim 7, wherein said step of encapsulating the data transmission pipe comprises steps of:
generating, by the pipe control module, information on the different media network connection manners available for both the source device and the target device at the present time, and judging whether a pipe information table exists in the device to which the pipe control module belongs; if not, creating a pipe information table, and adding the generated information into the pipe information table; if yes, directly adding the generated information into the pipe information table.

9. The method for data transmission according to Claim 7, wherein the information on the different media network connection manners available for both the source device and the target device contains a pipe identity, and information on network protocols and connection addresses commonly supported by the piped devices.

10. The method for data transmission according to Claim 1, wherein when said source device performs data transmissions with multiple target devices, said source device respectively creates data transmission pipes with the multiple target devices through its pipe control module.

11. The method for data transmission according to Claim 1, wherein said step 2) comprises:
21) judging, by the pipe control module of the source device, whether an active network protocol connection which is in an available state and corresponds to the created data transmission pipe exists or not at present, if yes, going to step 22);
if not, selecting one network protocol from the created data transmission pipe to attempt to create a new network protocol connection, and after the successful creation, going to step 22); and if the creation fails, selecting a next commonly-supported network protocol for attempts; if a connection can not be created even after all the matched protocols are tried, reporting to the source device that the data transmission pipe is not available, and the procedure being terminated;
22) putting, by the pipe control module, data to be transmitted into a task queue of the active network protocol connection which is in the available state at present, for transmitting the data to the target device.

12. The method for data transmission according to Claim 1, wherein the step of putting data to be transmitted into a task queue of the active network protocol connection which is in the available state at present in said step 22) comprises steps of:
22a) judging, by the pipe control module, the traffic amount waiting to be transmitted on the available connection and the average speed for transmitting data on the network connection, if the traffic amount waiting to be transmitted is too large or the average speed for transmitting data on the network connection is too low, going to step 22b); otherwise, putting the data to be transmitted into the task queue of the presently available network protocol connection;
22b) searching, by the pipe control module, whether any other available network protocol connection exists or not at present, if yes, returning to the step 22a); otherwise, selecting a network protocol commonly matched between the source device and the target device to attempt to create a new network protocol connection, if the creation is successful, putting the data to be transmitted into a task queue of the newly created network protocol connection; otherwise, putting the data to be transmitted into the task queue of the originally available network protocol connection.

13. The method for data transmission according to Claim 11, wherein the pipe control module of the source device performs the step 21) after receiving a command to transmit data sent by an application which will transmit data in the source device;
the pipe control module of the source device returns a result indicating whether the data transmission is successful or not to the application which will transmit data after the data transmission is completed or failed.

14. The method for data transmission according to Claim 13, wherein the command to transmit data sent by the application contains at least a pipe identity, an identity of the target device, an identity of a target application, and source data to be transmitted;
the data to be transmitted contains at least a device identity of the source device, an identity of the application transmitting the data, an identity of the target device, an identity of a target application, and source data to be transmitted;
after receiving the data, the pipe control module of the target device distributes the data to the target application program in the target device according to the identity of the target application in the data.

15. The method for data transmission according to Claim 1, wherein said step 3) comprises:
when the network protocol connection for transmitting the data is disconnected during the data transmission, selecting, by the pipe control module of the source device, a new media network connection manner out of the data transmission pipe, and creating a network protocol connection; if the creation is successful, using the new network protocol connection to continue the data transmission and notifying the source device; otherwise, notifying the source device that the data transmission is erroneous and the data transmission pipe is not available.

16. The method for data transmission according to Claim 1, wherein the method further comprises steps of: when the data transmission pipe is idle, sending, by the pipe control module of the source device, a pipe detection request to the target device;
after receiving the detection request, returning, by the pipe control module of the target device, a pipe detection response according to its operating conditions;
if the source device does not receive any pipe response or the received pipe response is that the pipe is not available, deleting, by the pipe control module of the source device, the pipe.

17. The method for data transmission according to Claim 16, wherein said pipe detection request contains at least an expected pipe available period from the source device;
said pipe detection response contains at least a pipe available period;
if the pipe available period is zero in the pipe response received by the source device, the pipe is not available.

18. The method for data transmission according to Claim 1, wherein the method further comprises: deleting, by the pipe control module of the source device or the target device, the data transmission pipe after the data transmission is completed, and sending a pipe close notification to the device of the counter-party, and deleting, by the device of the counter-party, the data transmission pipe after receiving the close notification.

19. The method for data transmission according to Claim 1, wherein said pipe control module sends a pipe close notification to the device of the counter-party after receiving a command to close the pipe sent by the application;
after deleting the data transmission pipe, the pipe control module returns a result indicating whether the pipe closure is successful or not to the application sending the command to close the pipe.
